# DEMANDE DE BREVET EUROPEEN

(11) **EP 0 620 561 A1**
(43) Date de publication de la demande: **19.10.1994**
(21) Numéro de dépôt: 94420117.7
(22) Date de dépôt: 12.04.1994
(51) Int. Cl.: G21C 19/18

(54) **Procédé pour la mise en place côte à côte d'assemblages de combustibles nucléaires dans une cuve de réacteur, et ensemble de modules pour la mise en oeuvre de ce procédé**

(30) Priorité: 16.04.1993 FR 9304726
(71) Demandeur: REEL S.A., F-69450 Saint Cyr au Mont d'Or (FR)
(72) Inventeur: Leveugle, Jean, F-69006 Lyon (FR)
(74) Mandataire: Laurent, Michel

(57) **Abrégé**

Ce procédé pour la mise en place côte à côte d'assemblages de combustibles nucléaires sur une plaque de coeur d'une cuve de réacteur, dans lequel la mise en place est effectuée au moyen d'un outil de manutention et au moyen de modules de guidage amovibles positionnés dans chaque emplacement, consiste dans l'ordre :
. à mettre en place sur la quasi-totalité des emplacements, des modules groupés par ensembles, à l'exception des emplacements périphériques de la plaque de coeur (P),
. à mettre en place des assemblages sur une portion de diagonale des emplacements périphériques vides,
. à retirer l'ensemble de modules adjacents de la diagonale suivante,
. à déposer l'ensemble de modules retiré sur une aire de stockage (S),
. à mettre en place des assemblages dans les emplacements ainsi libérés,
. enfin, à répéter la même séquence d'opérations sur les diagonales suivantes, jusqu'à remplir la quasi-totalité des emplacements.

L'invention concerne également un ensemble de modules pour la mise en oeuvre de ce procédé.

## Description

L'invention concerne un procédé pour la mise en place côte à côte d'assemblages de combustibles nucléaires dans la cuve de réacteur ; elle se rapporte également à un ensemble de modules pour la mise en oeuvre de ce procédé.

Comme on le sait, la cuve d'un réacteur nucléaire comprend une pluralité d'assemblages de combustibles disposés côte à côte sur une plaque support de coeur dite "plaque de coeur", qui présente une pluralité d'emplacements, généralement de forme carrée, disposés côte à côte dans une forme géométrique essentiellement orthogonale régulière, inscrite dans un cercle. Chaque assemblage est placé sur un emplacement précis qui, à cet effet, présente des trous femelles d'eau et des tenons mâles de positionnement, coopérant avec des trous femelles correspondants, placés à l'extrémité de chaque assemblage. Selon la puissance du réacteur, la cuve peut comprendre par exemple, respectivement cent quatre vingt treize (193) emplacements pour un réacteur de puissance de 1300 Megawatts, ou cent cinquante sept (157) emplacements pour une centrale de puissance de 900 Megawatts, voire deux cent un (201) emplacements pour un réacteur de 1450 Megawatts.

Lors du remplacement périodique des assemblages irradiés, on doit remettre en place des assemblages retirés mais non encore épuisés, ainsi que ceux qui sont à remplacer par des assemblages neufs. Si les assemblages neufs ne présentent pas de déformation, en revanche, les assemblages usagés sont souvent vrillés, notamment en forme dite de "banane". De la sorte, la mise en place de ces assemblages usagés dans les tenons de positionnement, est une opération longue et souvent délicate.

Pour pallier cet inconvénient, on a suggéré de faire appel à un module présentant un encombrement correspondant à celui de chaque assemblage, donc de chaque emplacement, que l'on positionne dans la plaque de coeur, et qui est destiné à servir d'appui à l'extrémité des assemblages pour les guider en fin de course sur les tenons appropriés de chaque emplacement.

Dans le document FR-A-2 588 689, correspondant au document US-A-4 788 028, le module de guidage se présente sous la forme d'un socle de forme pyramidale, associé au mât de manutention des assemblages. Dans le document FR-A-2 614 128, le moyen de guidage est formé d'une équerre constituée de deux ailes orthogonales présentant chacune une partie inclinée raccordée à une partie verticale.

Mais dans un cas comme dans l'autre, on ne peut traiter qu'un assemblage à la fois. Il faut alors transférer le module de guidage d'un emplacement à l'autre et ainsi de suite. Il s'ensuit que l'opération de chargement d'une cuve prend selon le cas de l'ordre de huit à dix jours. Au moins deux de ces journées sont d'ailleurs provoquées simplement par le seul déplacement de l'outil d'un emplacement à l'autre. Cette opération de chargement entraîne donc à elle seule une perte de production d'électricité appréciable.

Récemment, on a proposé de guider l'extrémité libre des assemblages en fin de course au moyen d'un dispositif automatique qui se déplace seul sur la plaque de coeur. Ce dispositif, qui permet de travailler en temps masqué et d'aller dans les coins, est malheureusement coûteux, lourd en maintenance et peut parfois présenter des problèmes de fiabilité.

L'invention pallie ces inconvénients. Elle vise un procédé du type en question pour le guidage et la mise en place côte à côte des assemblages, qui permet de traiter plusieurs assemblages à la fois, et par voie de conséquence de réduire d'autant la durée de l'intervention, donc de gagner en production d'électricité, tout en autorisant un déplacement fiable de l'assemblage-combustible, donc une descente plus rapide, d'où également un gain de temps, et ce de manière fiable, et sans faire appel à un dispositif compliqué et coûteux.

Ce procédé pour la mise en place côte à côte d'assemblages de combustibles nucléaires sur une plaque de coeur d'une cuve de réacteur, présentant une pluralité d'emplacements contigus de section régulière comportant chacun des tenons mâles de positionnement et des trous femelles d'eau, procédé dans lequel la mise en place est effectuée au moyen d'un mât de manutention et au moyen de modules de guidage amovibles positionnés dans chaque emplacement, constitué d'une portion inclinée et d'une portion verticale pour assurer le guidage et la mise en place de l'extrémité libre de chaque assemblage dans les tenons mâles de positionnement, se caractérise en ce qu'il consiste dans l'ordre :
. à mettre en place sur la quasi-totalité des emplacements, des modules groupés par ensembles, à l'exception des emplacements périphériques de la plaque de coeur,
. à mettre en place des assemblages sur une portion de diagonale des emplacements périphériques vides,
. à retirer l'ensemble de modules de la diagonale suivante,
. à déposer l'ensemble de modules retiré sur une aire de stockage,
. à mettre en place des assemblages dans les emplacements ainsi libérés,
. enfin, à répéter la même séquence d'opérations sur les diagonales suivantes, jusqu'à remplir la quasi-totalité des emplacements.

En d'autres termes, l'invention consiste à faire appel à des ensembles de modules amovibles disposés en quinconce et en diagonale, et non plus à des modules unitaires, ce qui permet par des séquences appropriées et en stockant ces modules sur une aire voisine, de réduire considérablement, en l'occurrence du tiers à la moitié, la durée de l'opération de chargement, de réduire le nombre des déplacements des modules et par voie de conséquence de gagner en production d'électricité.

Avantageusement, le stockage des ensembles de modules est effectué sur une aire de stockage géométriquement analogue à celle de la plaque de coeur, mais qui est placée à proximité de celle-ci, dans la piscine même où se trouve le réacteur. Il suffit ainsi par des déplacements simples ou doubles, de translater latéralement les ensembles de modules retirés pour les positionner de manière homothétique sur l'aire de stockage. De la sorte, lorsqu'il s'agira de nouveau de remettre en place ces ensembles sur la plaque de coeur, ces ensembles seront prêts à l'être dans un laps de temps court, ce qui réduit encore d'autant la durée de l'intervention.

L'invention concerne également un ensemble de modules élémentaires pour la mise en oeuvre de ce procédé, du type dans lequel chaque module élémentaire de guidage présente d'une part, sur sa face inférieure destinée à venir au contact de la plaque de coeur, des trous femelles aptes à coopérer avec les pions de positionnement et d'autre part, deux parois verticales adjacentes raccordées à une portion inclinée de guidage, caractérisé en ce que les modules sont assemblés à plusieurs pour former un ensemble, de manière à être réunis par un sommet en quinconce selon une diagonale de la plaque de coeur.

En pratique, le moyen d'assemblage des modules élémentaires est constitué par une équerre formée de deux ailes, respectivement une aile horizontale de liaison des modules et une aile verticale de rigidification.

En pratique, pour un réacteur de 900 ou de 1 300, voire 1 450 Megawattas, les ensembles de modules comprennent quatre types de séries, respectivement de quatre, de cinq, de six ou de sept modules assemblés en quinconce et en diagonale, et une série formée d'un côté de la diagonale de trois modules, et de l'autre côté de deux modules toujours disposés en quinconce.

Pour une plaque de coeur de cent quatre vingt treize emplacements, on utilise neuf ensembles de quatre modules, quinze ensembles de cinq modules, trois ensembles de six modules et deux ensembles de sept modules, le dernier module de cinq étant formé de trois modules groupés d'un côté de la diagonale, deux de l'autre.

Avantageusement, chaque module :
- est creux et présente à sa base une traverse présentant des trous femelles pour coopérer avec les pions mâles de positionnement ;
- présente sur le dessus un décrochement horizontal en creux relié aux deux parois inclinées adjacentes, pour permettre le passage de l'aile de liaison de l'équerre de l'ensemble suivant ;
- présente sur le dessus des orifices pour assurer la circulation de l'eau de refroidissement.

L'aile horizontale de liaison de chaque ensemble des modules, comporte des moyens de préhension par l'outil de manutention, tels que des orifices tronconiques de centrage à blocage par quart de tour.

Dans une variante avantageuse, notamment pour assurer une meilleure cohérence de l'installation, plus particulièrement à la poussée de l'eau, les ensembles d'une diagonale peuvent se chevaucher sur le bord avec ceux de la diagonale voisine.

La manière dont l'invention peut être réalisée et les avantages qui en découlent, ressortiront mieux de l'exemple de réalisation qui suit à l'appui des figures annexées.

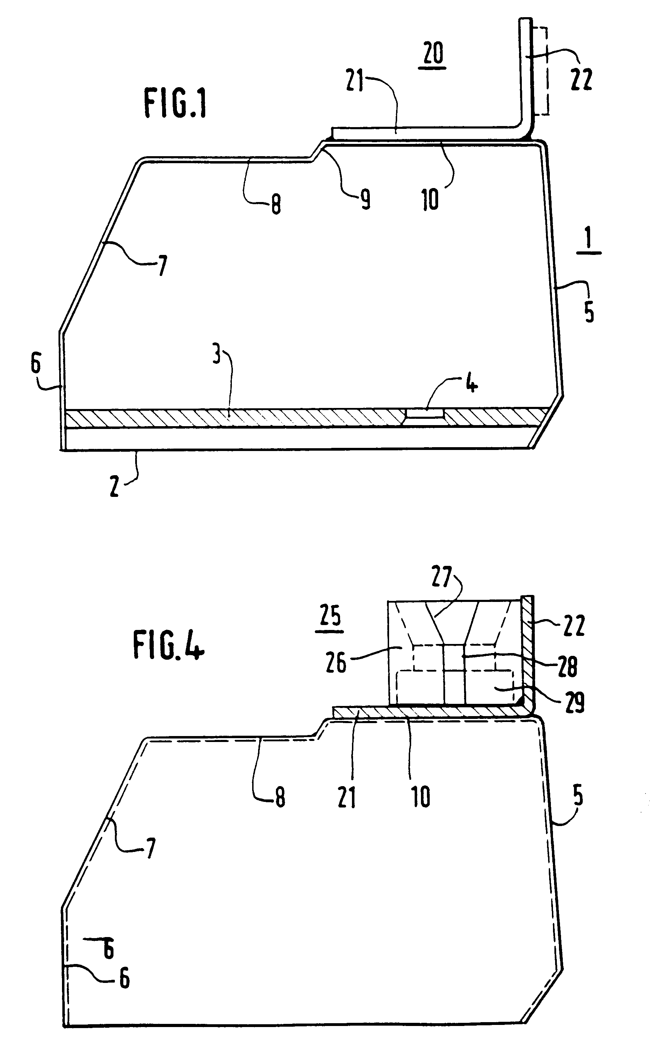

La figure 1 est une vue en coupe d'un module caractéristique conforme à l'invention montré en vue de dessus à la figure 2.

La figure 3 montre un ensemble de modules caractéristique de l'invention vu de dessus, montré en coupe selon l'axe IV-IV à la figure 4.

La figure 5A est une représentation schématique du mât de manutention, dont la figure 5B est une variante.

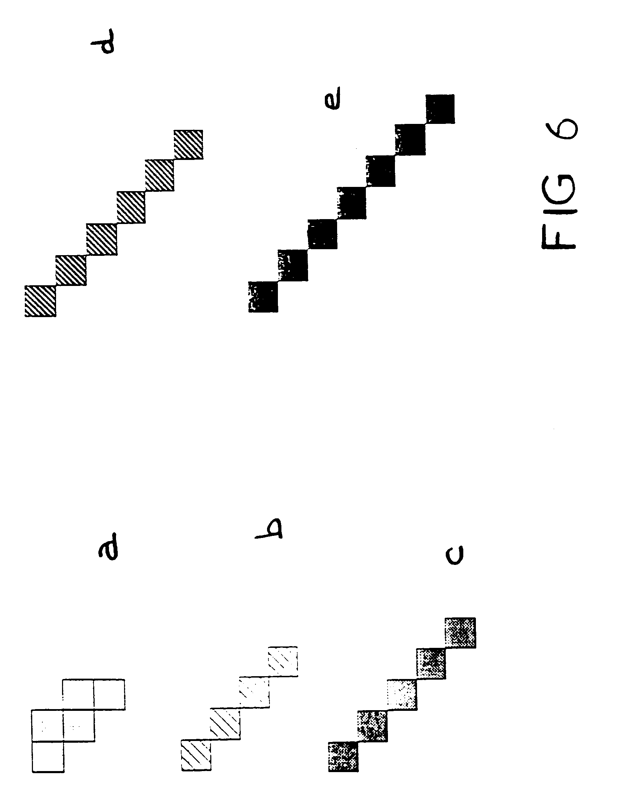

La figure 6 est une représentation symbolique des différents ensembles de modules référencés (a) à (e) utilisés dans le procédé de l'invention.

La figure 7 est une représentation schématique d'une part, côté gauche de la plaque de coeur chargée avec tous les ensembles de modules, et côté droit de l'aire de stockage vide.

Les figures 8 à 14 symbolisent la mise en oeuvre du procédé selon l'invention. Sur toutes ces figures 7 à 14, qui font partie intégrante de la description, on a représenté à droite la plaque de coeur (P), à gauche l'aire de stockage (S).

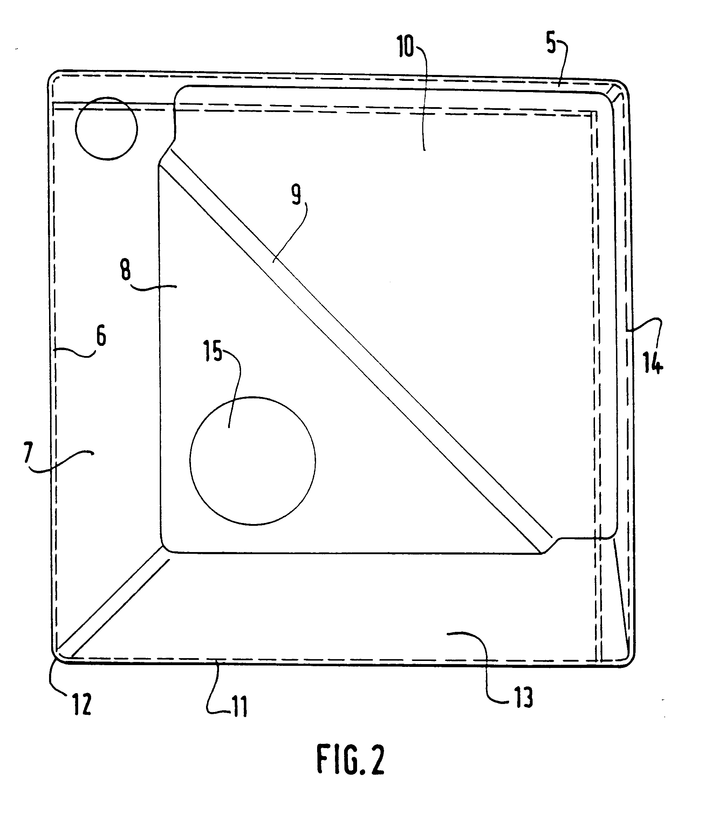

Le module caractéristique de l'invention désigné par la référence générale (1), est réalisé en tôle d'acier inoxydable emboutie ou mécano-soudé. Ce module (1) est creux et présente au voisinage de sa base (2) destinée à venir au contact de la plaque de coeur (P), une traverse (3) présentant des trous femelles (4) destinés à venir s'engager et à coopérer avec les pions mâles de positionnement classiques et non représentés. La face arrière (5) de ce module est légèrement inclinée pour permettre la dépouille. La face avant comprend deux parties, respectivement depuis la base, une première partie (6) verticale raccordée à une partie inclinée (7) pour le guidage de l'extrémité libre de l'assemblage de combustibles. Cette portion (7) de guidage est inclinée de l'ordre de trente degrés, et se raccorde par le haut à un décrochement horizontal (8) raccordé par une portion (9) à la face supérieure (10) horizontale du module. Comme on le voit sur la figure 2, chaque module présente deux parois verticales adjacentes (6,11), raccordées par leur sommet (12), associées à deux parois inclinées respectivement (7,13), également adjacentes, toutes deux reliées au décrochement (8). En revanche, les faces arrières opposées (5,14) sont reliées à la face de dessus (10). Le décrochement (8) est situé en dessous du plan supérieur (10). La portion de raccordement (8) présente un orifice (15) unique ou multiple, destiné à assurer la circulation de l'eau de refroidissement.

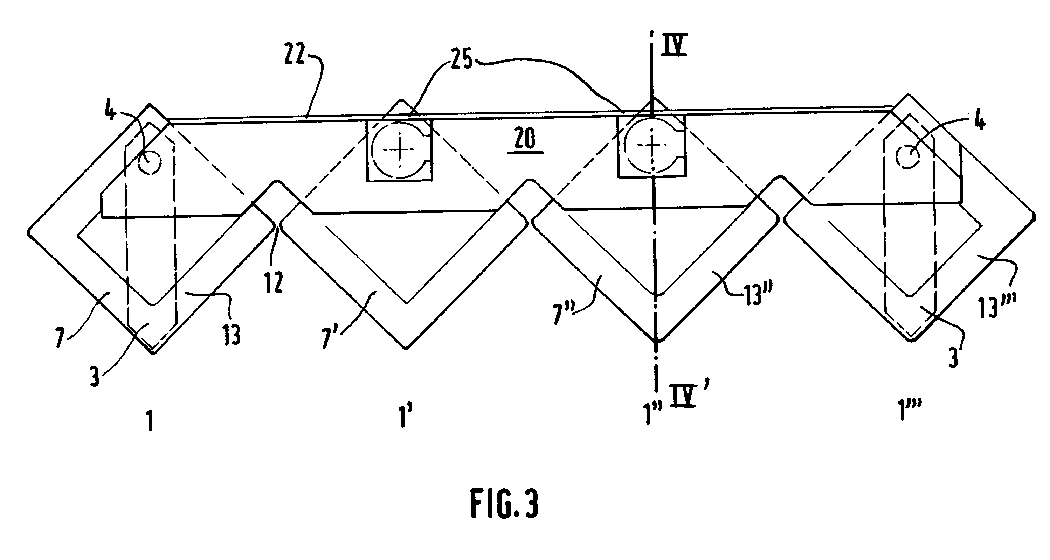

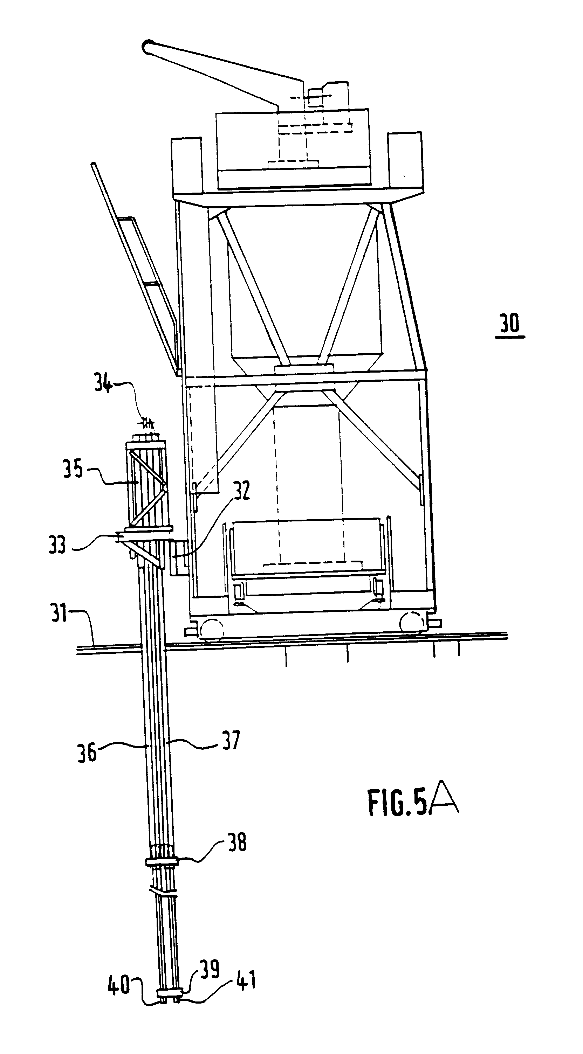

Selon une caractéristique de l'invention montrée à la figure 3, plusieurs modules élémentaires (1,1',1'',1''') sont assemblés, dans le cas d'espèce par quatre, de manière à être réunis par un sommet (12) en quinconce et en diagonale comme on le voit sur la figure 3. Cet assemblage est effectué au moyen d'une équerre (20) formée de deux ailes, respectivement une aile horizontale (21) de liaison proprement dite, et une aile verticale (22) de rigidification. Les modules extrêmes (1,1''') présentent chacune une traverse (3) de centrage, alors que les modules centraux (1',1'') reçoivent un moyen de préhension (voir figure 4) désigné par la référence (25), constitué par un bloc (26) présentant de haut en bas une entrée tronconique effilée (27), une portion cylindrique (28), une embase (29), de manière à ce que l'extrémité (40,41) de l'outil de manutention puisse pénétrer et se bloquer en (29) par une rotation d'un quart de tour.

En se référant à la figure 5A, la référence (30) désigne la machine existante qui se déplace de manière connue sur une voie (31) de roulement. Pour la mise en oeuvre du procédé selon l'invention, cette machine (30), présente une poutre (32) le long de laquelle va se déplacer horizontalement un chariot (33) portant l'outil de manutention, qu'il suffit donc ainsi d'ajouter tout simplement à l'équipement existant. Cet outil est formé essentiellement d'un treuil non représenté car il est disposé sur l'arrière, d'une poulie de renvoi (34) et d'un ensemble de tubes (35) télescopiques reliés par paire (36,37) au moyen d'une pièce de liaison (39) destinée à assurer l'entraxe des tubes (36,37). Les extrémités (40,41) de l'outil de manutention, coopérent avec l'organe (25) quart de tour. Il va de soi que selon le type de machines, la manutention peut être effectuée soit par un mât spécifique prévu à cet effet, soit par un mât dédié à une autre fonction principale, mais pouvant être également affecté à celle-ci.

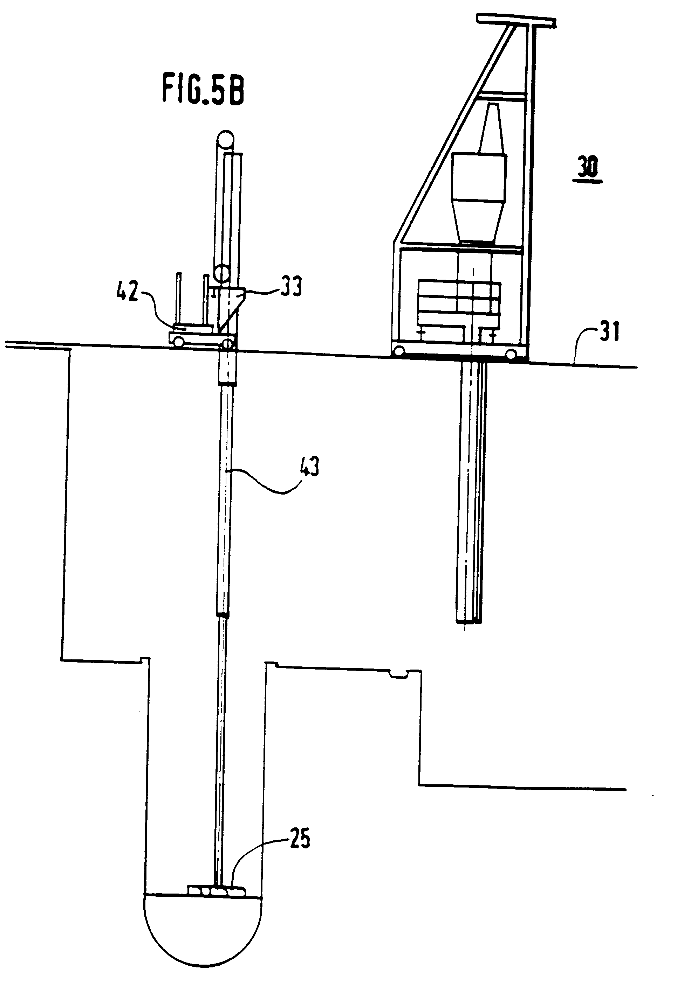

En outre, l'outil de manutention peut bien entendu être installé de manière autonome sur une poutre roulante ou sur une passerelle roulante annexe, circulant sur la même voie que celle de la machine de chargement. Ainsi, comme on peut le voir sur la figure 5B, le chariot (33) portant l'outil de manutention est lui-même porté sur une passerelle roulante (42), empruntant la même voie (31) que celle de la machine de chargement (30). On a représenté par la référence (43) les tubes de l'outil de manutention.

On observe ainsi, que pour la mise en place du pavage, celui-ci peut être réalisé soit par la machine de chargement quand cela est possible, soit par un organe séparé et autonome (42), sans pour autant intervenir sur le chemin critique, c'est à dire sur le circuit sur lequel se positionnent toutes les opérations entre la première et la dernière.

S'agissant du retrait du pavage, cette fonction s'effectue également sur le chemin critique, si elle est assurée par la machine de chargement, puisqu'alors, il s'agit d'une opération intermédiaire entre deux chargements. Il est donc particulièrement interessant, sinon impératif d'utiliser un organe autonome extérieur à la dite machine de chargement. Cet organe mû par le biais de la passerelle roulante (42), peut en outre assurer d'autres fonctions en dehors des périodes de chargement. Cet organe dispose dans ce cas d'un contrôle-commande simplifié, avec un automate permettant de sélectionner facilement les indexing, c'est à dire les données de translation - direction, de pose et de dépose, et gérant la sécurité d'interface avec la machine de chargement. L'interêt d'un tel organe autonome se traduit par une diminution de la durée des arrêts de tranches de centrale pour les opérations de chargement et de déchargement, et partant par une réduction des pertes inhérentes à de tels arrêts.

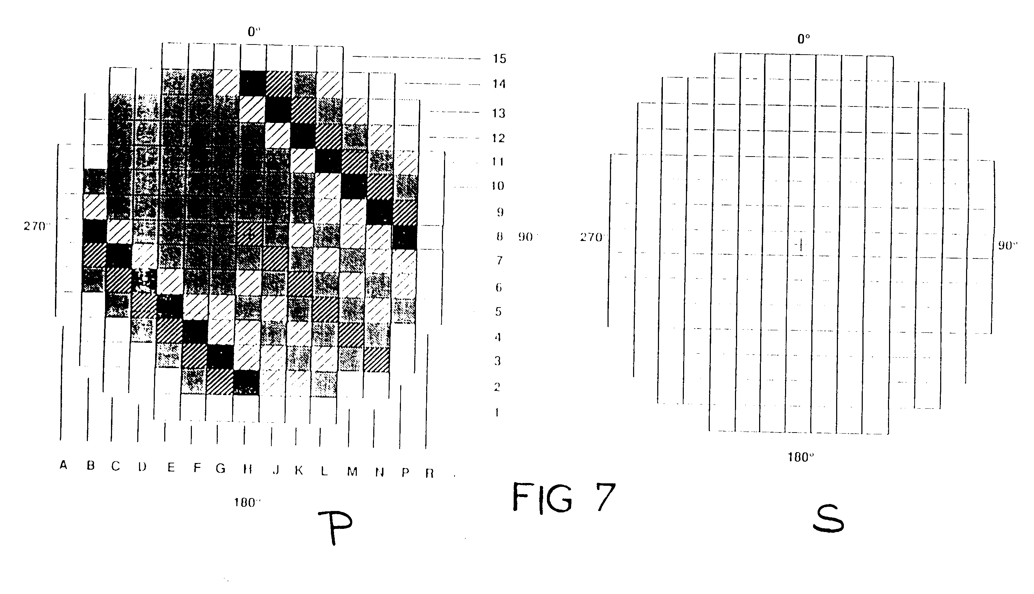

Comme représenté sur les figures 7 et suivantes, la plaque de coeur (P) comprend cent quatre vingt treize emplacements de section carrée, et dont la périphérie épouse le contour général d'un octogone inscrit dans un cercle. De manière connue, ces emplacements sont sur les deux grandes directions au nombre de quinze, référencés verticalement (1) à (15), et horizontalement (A) à (R).

Selon l'invention (voir figure 7), les modules sont assemblés en quinconce et selon une diagonale de cette plaque de coeur (P), par groupe respectivement :
. de quatre représentés hachurés largement espacés référencés (B) au nombre de neuf ;
. de cinq représentés en pointillés et tirets référencés (C) au nombre de quinze ;
. de six représentés hachurés plus épais référencés (B) au nombre de trois ;
. de sept représentés en plein référencés en (E) au nombre de deux ;
. enfin, d'un ensemble référencé (A) de cinq modules disposés respectivement trois sur le côté de la diagonale, deux de l'autre côté.

Comme déjà dit, la partie gauche des figures représente la plaque de coeur (P), alors que la partie droite représente avec les mêmes dispositions l'aire de stockage (S) disposée à côté de la plaque de coeur (P) dans la piscine même.

La figure 7 représente la totalité des ensembles (a,b,c,d et e) mis en place sur la plaque de coeur (P) dont on voit que les emplacements périphériques sont laissés vacants. De la sorte, la quasi-totalité des emplacements sont recouverts par des modules, à l'exception d'une partie appréciable du pourtour de la plaque de coeur (P).

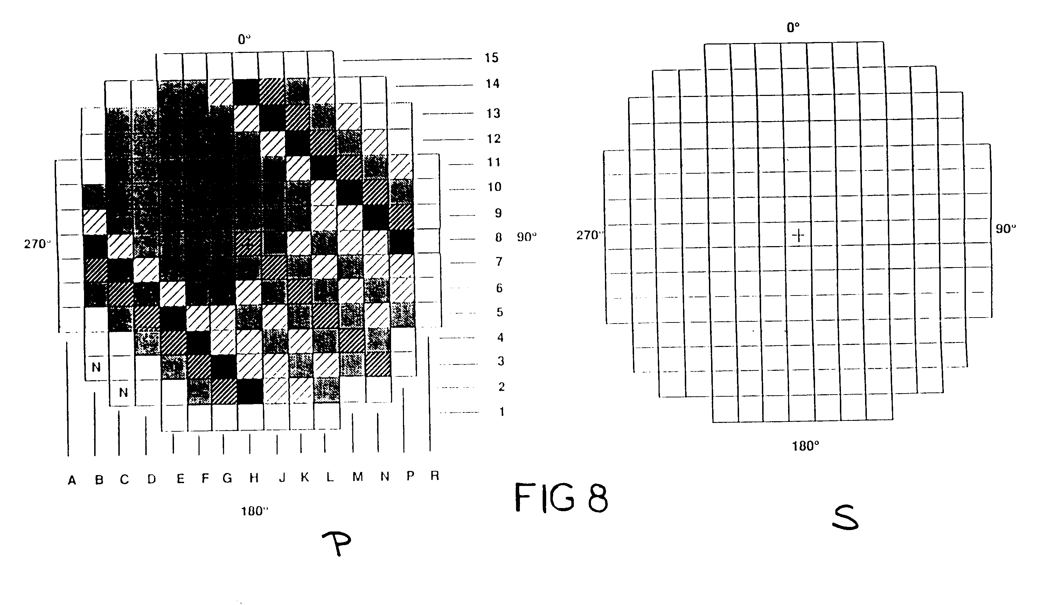

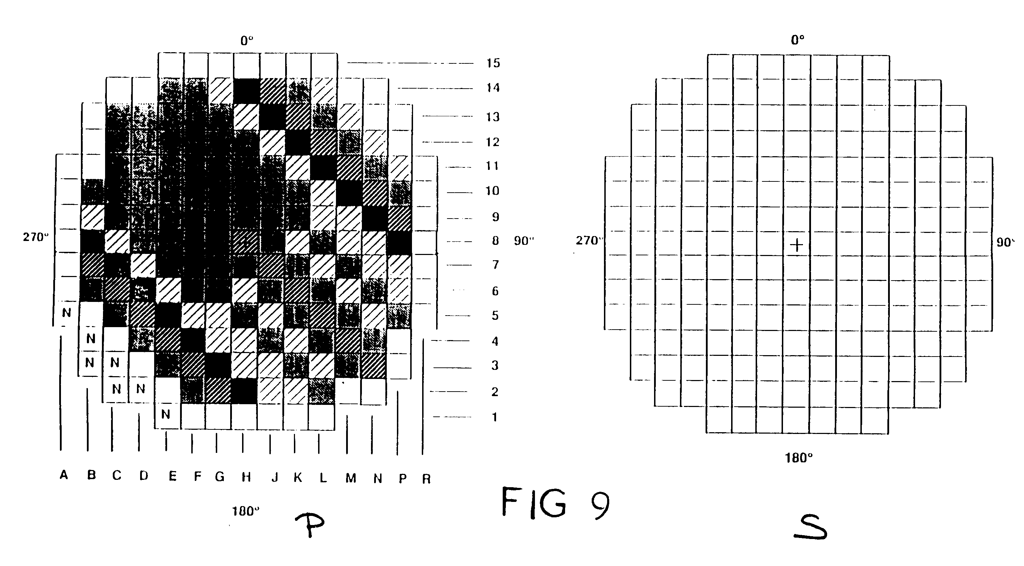

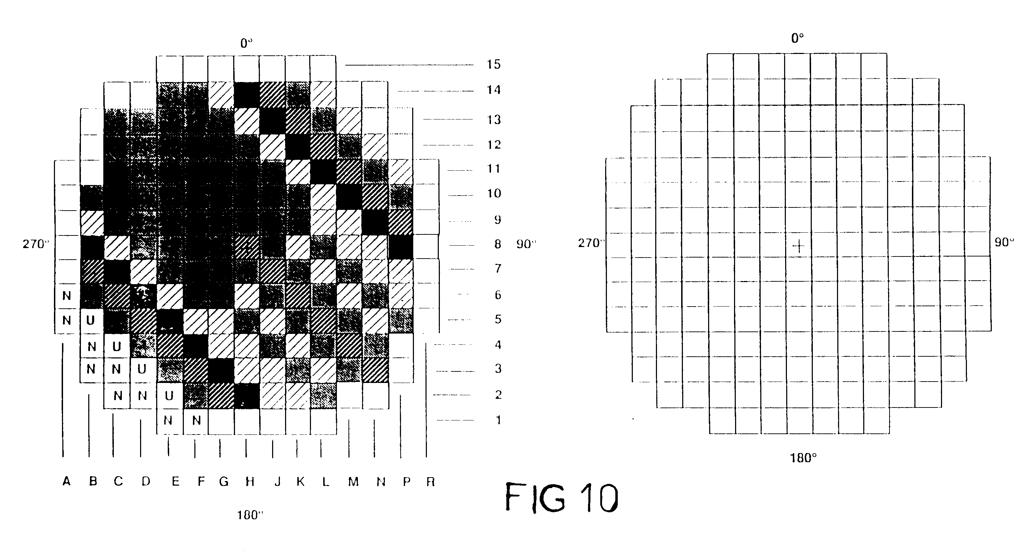

De manière classique (voir figure 8), on met en place sur la première diagonale, à savoir les emplacements (B3) et (C2) des assemblages de combustibles. On remplit de même (figure 9) la diagonale suivante (A5), (B4), (C3), (D2), (E1) : deuxième diagonale, puis la troisième diagonale (figure 10). La référence (N) désigne des assemblages de combustibles nucléaires neufs, alors que la référence (U) désigne des assemblages usés, mais utilisables.

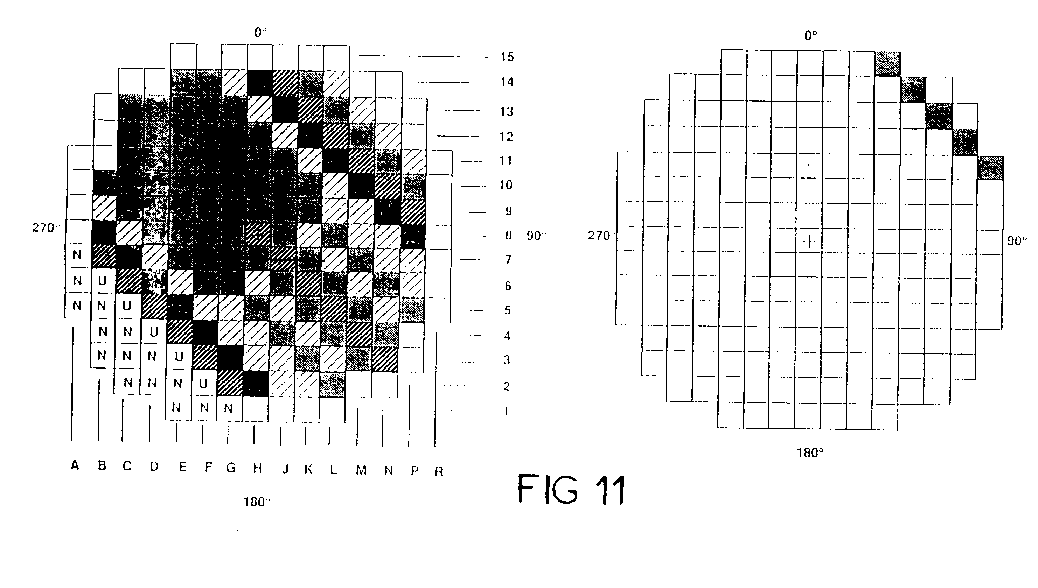

On enlève ensuite (figure 11) l'ensemble de cinq éléments (C) de la quatrième diagonale suivante (voir figure 11), (B6) à (F2), et on place cet ensemble sur l'aire de stockage (S) sur la diagonale (K15)-(R11) comme indiqué côté gauche de la figure 11. On enlève ensuite l'ensemble (D) (B7-G2) que l'on place de manière jointive à l'ensemble déjà en place sur l'aire de stockage (S) comme on le voit sur le côté droit de la figure.

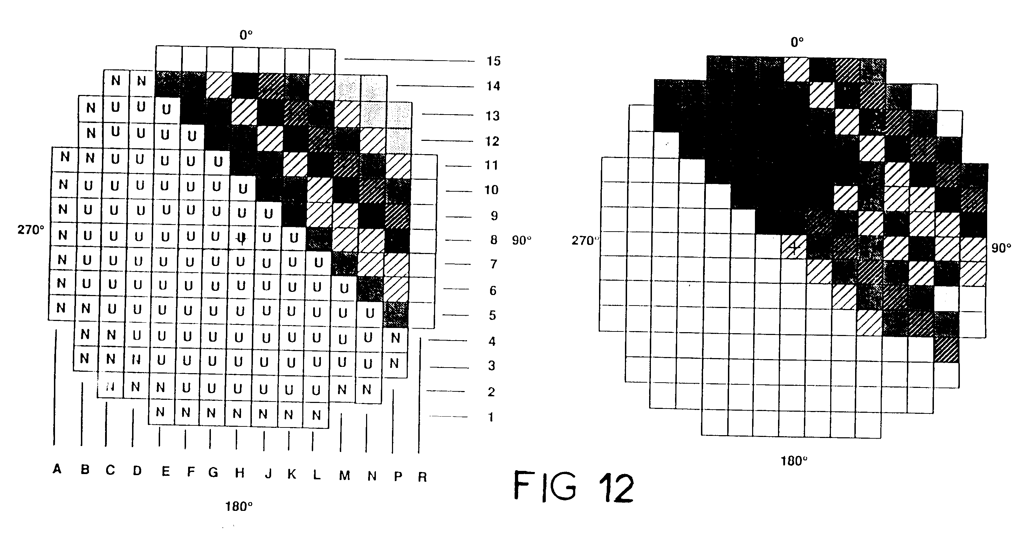

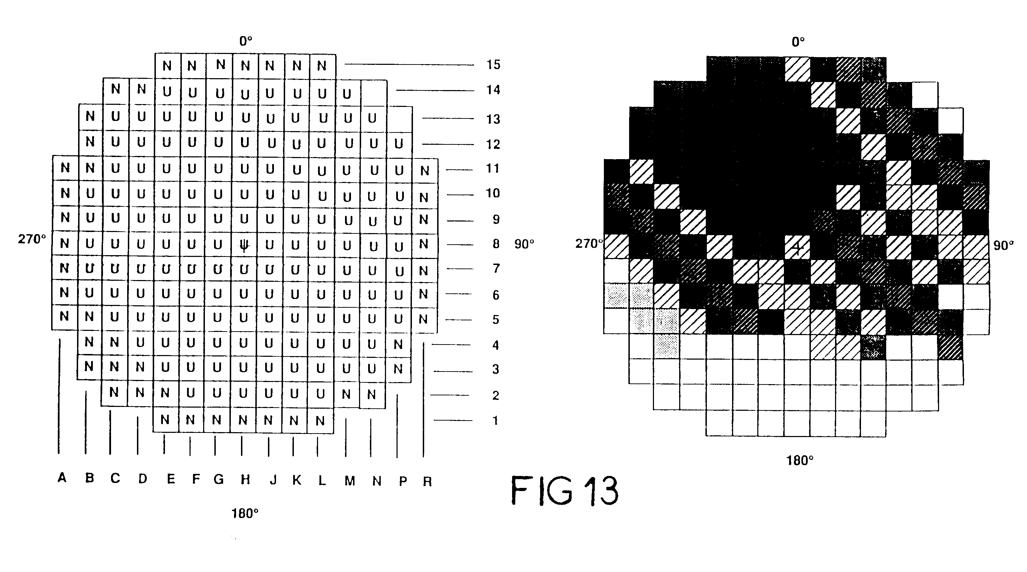

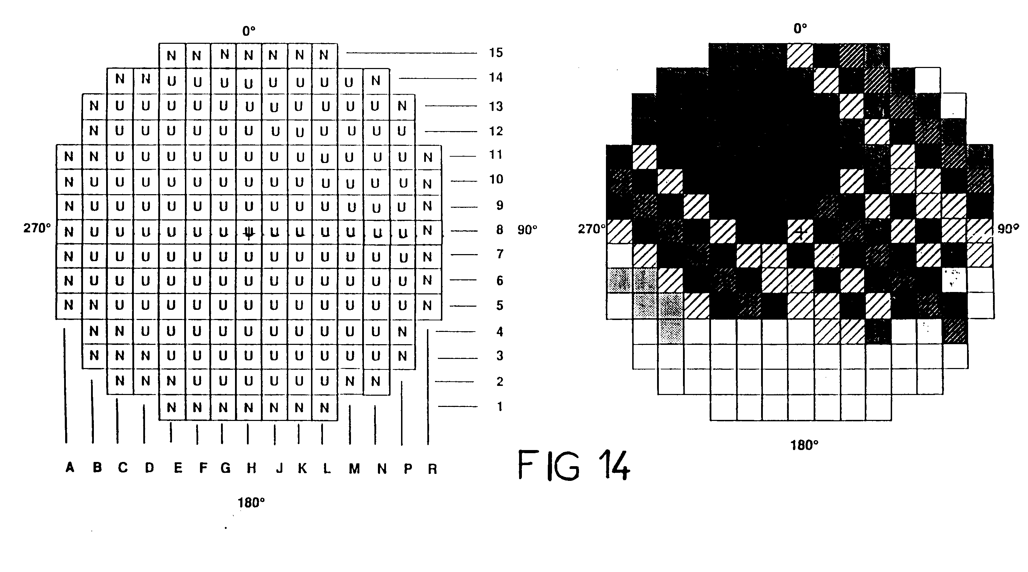

Puis on répète l'opération come précédemment en opérant successivement selon des diagonales parallèles pour finir aux positions illustrées aux figures 12 à 14.

Le procédé selon l'invention présente de nombreux avantages par rapport à ceux décrits dans le préambule.

Tout d'abord, le module caractéristique de l'invention est léger, rustique, simple à fabriquer, facile à refroidir, ce qui réduit d'autant les investissements par rapport à un dispositif automatique évoqué dans le préambule.

Le procédé de mise en oeuvre se caractérise essentiellement en ce qu'on opère par ensembles de modules, ce qui permet en une seule passe, de mettre en place jusqu'à sept assemblages en les positionnant même dans les coins, ce qui permet donc d'économiser une durée notable, et par là de gagner en production de courant électrique. Comme on opère sur des ensembles de modules et non plus sur des modules unitaires, outre la diminution appréciable de temps, on réduit également le nombre de manutentions et les risques qui y sont associés. La mise en place des ensembles de modules sur la plaque de coeur préalablement à l'opération de chargement, peut facilement s'effectuer en temps masqué.

Tous ces éléments dans l'opération de chargement, aboutissent à un gain de temps de deux à trois jours par comparaison avec les solutions rappelées dans le préambule faisant appel à un modèle unitaire, soit une économie de trente à cinquante pourcent (30 à 50 %) de la durée de chargement, donc une production d'énergie électrique correspondante.

En outre, par rapport aux dispositifs autonomes automatiques visés dans le préambule, on diminue le coût de fabrication et surtout de maintenance, tout en augmentant la fiabilité du procédé.

Il va de soi que si l'invention a été décrite dans son application à un réacteur de 1 300 Megawatts, elle peut l'être également de la mêmemanière à tous les autres types de réacteurs.

## Revendications

**1/** Procédé pour la mise en place côte à côte d'assemblages de combustibles nucléaires sur une plaque de coeur d'une cuve de réacteur, présentant une pluralité d'emplacements contigus de section régulière comportant chacun des tenons mâles de positionnement et des trous femelles d'eau, procédé dans lequel la mise en place est effectuée au moyen d'un outil de manutention et au moyen de modules de guidage amovibles positionnés dans chaque emplacement, constitué d'une portion inclinée (7,13) raccordée à une portion verticale (6,11) pour assurer le guidage, puis la mise en place de l'extrémité libre de chaque assemblage dans les tenons mâles de positionnement, ***caractérisé****en ce* qu'il consiste dans l'ordre :
. à mettre en place sur la quasi-totalité des emplacements, des modules (1) groupés par ensembles, à l'exception des emplacements périphériques de la plaque de coeur (figure 7),
. à mettre en place des assemblages sur une portion de diagonale des emplacements périphériques vides (figures 8 et 9),
. à retirer l'ensemble de modules adjacents de la diagonale suivante,
. à déposer l'ensemble de modules retiré sur une aire de stockage (S),
. à mettre en place des assemblages dans les emplacements ainsi libérés (figure 10),
. enfin, à répéter la même séquence d'opérations sur les diagonales suivantes, jusqu'à remplir la quasi-totalité des emplacements.

**2/** Procédé selon la revendication 1, ***caractérisé*** en ce que le stockage des ensembles de modules, est effectué sur une aire de stockage (S) géométriquement analogue à celle de la plaque de coeur (P), placée à proximité de celle-ci, dans la piscine même où se trouve le réacteur.

**3/** Ensemble de modules pour la mise en oeuvre du procédé selon l'une des revendications 1 et 2, du type dans lequel chaque module élémentaire (1) de guidage présente, d'une part sur sa face inférieure destinée à venir en contact de la plaque de coeur (P), des trous (24) aptes à coopérer avec des pions de positionnement, et d'autre part, deux parois verticales adjacentes (6,11) raccordées à une portion inclinée (7,13) de guidage, ***caractérisé*** en ce que les modules (1,1',1'',1''') (voir figure 3), sont assemblés à plusieurs pour former un ensemble, de manière à être réunis par un sommet (12) en quinconce selon une diagonale de la plaque de coeur (P).

**4/** Ensemble de modules selon la revendication 3, ***caractérisé*** en ce que le moyen d'assemblage des modules (1-1''') est constitué par une équerre (20) formée de deux ailes respectivement une aile horizontale de liaison (21) des modules et une aile verticale (22) de rigidification.

**5/** Ensemble de modules selon l'une des revendications 3 et 4, ***caractérisé*** en ce que chaque module :
- est creux et présente à sa base une traverse (3) présentant des trous femelles (4) pour coopérer avec les pions mâles de positionnement ;
- présente sur le dessus (10) un décrochement (8) horizontal en creux relié aux deux parois inclinées (7,11) adjacentes, pour permettre le passage de l'aile de liaison (21) de l'équerre de l'ensemble suivant ;
- présente sur le dessus (10) des orifices (15) pour assurer la circulation de l'eau de refroidissement.

**6/** Ensemble de modules selon l'une des revendications 3 à 5, ***caractérisé*** en ce que l'équerre présente des moyens (25) de préhension de l'extrémité (41) de l'outil de manutention, formés d'un ensemble (27,28,29) à quart de tour.

**7/** Ensemble de modules selon l'une des revendications 3 à 6, ***caractérisé*** en ce lesdits ensembles sont mis en place par le biais de l'outil de manutention, lui-même mû par la machine de chargement (30) ou par un organe indépendant (42), se déplaçant sur le même chemin de roulement que ladite machine (30).
